(19) Europäisches Patentamt
European Patent Office
Office européen des brevets

(11) EP 1 282 666 B1

(12) **EUROPÄISCHE PATENTSCHRIFT**

(45) Veröffentlichungstag und Bekanntmachung des Hinweises auf die Patenterteilung:
**24.09.2003 Patentblatt 2003/39**

(21) Anmeldenummer: **01927860.5**

(22) Anmeldetag: **03.04.2001**

(51) Int Cl.[7]: **C09B 67/12**, C09B 67/16, C08K 9/04

(86) Internationale Anmeldenummer:
**PCT/EP01/03775**

(87) Internationale Veröffentlichungsnummer:
**WO 01/077231 (18.10.2001 Gazette 2001/42)**

(54) **ANCHLORIERTE KUPFERPHTHALOCYANINPIGMENTE**
CHLORINATED COPPER PHTHALOCYANINE PIGMENTS
PIGMENTS DE PHTHALOCYANINE DE CUIVRE CHLORES

(84) Benannte Vertragsstaaten:
**DE FR GB IT**

(30) Priorität: **07.04.2000 DE 10016993**

(43) Veröffentlichungstag der Anmeldung:
**12.02.2003 Patentblatt 2003/07**

(73) Patentinhaber: **BASF AKTIENGESELLSCHAFT
67056 Ludwigshafen (DE)**

(72) Erfinder:
- **KLOPP, Ingo
67256 Weisenheim (DE)**
- **HETZENEGGER, Josef
67134 Birkenheide (DE)**
- **BÖTTCHER, Peter
67316 Carlsberg (DE)**

(56) Entgegenhaltungen:
**EP-A- 0 182 207**
**EP-A- 0 909 795**
**DE-A- 1 569 639**
**DE-B- 1 143 176**
**FR-A- 1 441 088**
**GB-A- 891 736**
**US-A- 3 004 986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft neue anchlorierte Kupferphthalocyaninpigmente mit einem Chlorgehalt von 10 bis 40 Gew.-%, die in LDPE eine Dispergierhärte ≤ 10 aufweisen.

Außerdem betrifft die Erfindung die Herstellung dieser Pigmente und ihre Verwendung zum verzugsfreien Einfärben von Kunststoffen.

Organische Pigmente fallen in der Regel bei der Synthese in einer Form an, die nicht für die weitere Verwendung geeignet ist. Daher wurden unterschiedliche Methoden entwickelt, um diese amorphen bis mikrokristallinen Rohpigmente in eine für die Anwendung geeignete Pigmentform zu überführen.

Aus der EP-A-909 795 ist für diesen Zweck die Behandlung von anchlorierten (blauen) Kupferphthalocyaninpigmenten mit sauren aromatischen organischen Lösungsmitteln, wie Nitrophenol und Naphthol, bei Temperaturen um 100°C bekannt. Wesentliches Merkmal dieses Verfahrens ist die Anwesenheit von separat hergestellten Pigmentderivaten. Die bei diesem Verfahren erhaltenen Pigmente bereiten jedoch aufgrund ihrer Dispergierhärte bei der Einarbeitung in Kunststoffe Probleme.

Für polyhalogenierte (grüne) Kupferphthalocyaninpigmente mit einem Halogengehalt von mindestens 49,5 Gew.-% wird in der DE-PS-12 42 180 die thermische Behandlung in Nitrophenol bei Temperaturen um 135°C beschrieben. Aus der DE-PS-15 69 639 ist die thermische Behandlung von polyhalogenierten Kupferphthalocyaninpigmenten mit einem Halogengehalt von mindestens 48,4 Gew.-% in Naphthol bei Temperaturen um 100°C bekannt. Bei beiden Verfahren wird ohne weitere Zusatzstoffe im offenen System gearbeitet. Wie Vergleichsversuche in der EP-A-909 795 zeigen, führt die Lösungsmittelbehandlung bei 100°C in Abwesenheit der Pigmentderivate bei anchlorierten Kupferphthalocyaninpigmenten jedoch zu farbschwächeren, trüben Pigmenten.

Für die Einfärbung von Kunststoffen müssen organische Pigmente eine Reihe von Eigenschaften aufweisen. Neben der bereits erwähnten Dispergierweichheit, d.h. der guten Einarbeitbarkeit des Pigments in den Kunststoff, sind hohe Farbstärke und hohe Echtheiten (z.B. Wetter-, Licht- und Migrationsechtheit) wesentliche Eigenschaften. Eine weitere besondere Anforderung besteht bei der Einfärbung von großvolumigen, durch Spritzguß hergestellten Kunststoffteilen. Hier sind häufig sogenannte Verzugserscheinungen zu beobachten. Darunter versteht man eine in den verschiedenen Raumrichtungen unterschiedliche Schrumpfung des Kunststoffteils wahrend des Abkühlens, die eine Deformierung des Kunstoffteils zur Folge hat und dieses unbrauchbar machen kann. Der Verzug wird durch die Anwesenheit des Pigments hervorgerufen, welches die Kristallisation des Kunststoffs stört.

Um den Verzugsproblemen entgegenzuwirken, wurden verschiedene Methoden vorgeschlagen, durch die die Oberfläche des organischen Pigments verändert wird. So wird in der EP-A-621 306 die Behandlung mit einem Niedertemperaturplasma beschrieben. In den JP-A-124 039/1977, 121 845/1978 und 023 840/1983 werden Kupferphthalocyaninpigmente für diesen Zweck derivatisiert.

Diese Methoden sind jedoch nachteilig, da sie technisch aufwendig sind bzw. die zusätzliche Synthese von Pigmentderivaten erfordern.

Der Erfindung lag daher die Aufgabe zugrunde, farbstarke, blaue Kupferphthalocyaninpigmente, mit denen Kunststoffen verzugsfrei eingefärbt werden können, bereitzustellen.

Demgemäß wurden anchlorierte Kupferphthalocyaninpigmente mit einem Chlorgehalt von 10 bis 40 Gew.-%, die in LDPE eine Dispergierhärte ≤ 10 aufweisen, gefunden.

Außerdem wurde ein Verfahren zur Herstellung dieser Pigmente gefunden, welches dadurch gekennzeichnet ist, daß man das bei der Chlorierung von Kupferphthalocyanin erhaltene Rohpigment als wasserfeuchten Filterkuchen isoliert, gegebenenfalls trocknet, das wasserfeuchte bzw. das getrocknete Rohpigment mit einem sauren aromatischen organischen Medium mischt und dieses Gemisch im geschlossenen System bei einem Druck von 1 bis 7 bar auf 140 bis 200°C erhitzt sowie das behandelte Pigment anschließend auf übliche weise isoliert.

Nicht zuletzt wurde die Verwendung der erfindungsgemäßen Pigmente zum verzugsfreien Einfärben von Kunststoffen gefunden.

Die erfindungsgemäßen anchlorierten Kupferphthalocyaninpigmente weisen einen Chlorgehalt von 10 bis 40 Gew.-% (entspricht etwa 2 bis 10 Chloratomen pro Molekül), bevorzugt von 10 bis 30 Gew.-% (entspricht etwa 2 bis 6 Chloratomen) und besonders bevorzugt von 10 bis 20 Gew.-% (entspricht etwa 2 bis 4 Chloratomen) auf.

Sie zeichnen sich durch ihre koloristischen Eigenschaften, vor allem ihre hohe Farbstärke und Brillanz, und insbesondere auch durch ihre Dispergierweichheit aus. Ihre Dispergierhärte liegt in LDPE (üblicher Molekulargewichtsbereich von 20000 bis 50000, üblicher Rohdichtebereich von 0,910 bis 0,935 g/cm$^3$) bei ≤ 10.

Gleichzeitig ermöglichen sie ein verzugsfreies Einfärben von Kunststoffen, was nicht zu erwarten war, da Dispergierweichheit und Verzugsfreiheit gegenläufige Eigenschaften sind: Die Dispergierweichheit nimmt mit steigender Primärkristallgröße zu, während die Verzugsfreiheit üblicherweise mit steigender Primärkristallgröße abnimmt, da größere Pigmentkristalle zu einer stärkeren Störung der Kristallisation des Kunststoffs führen.

Die erfindungsgemäßen Pigmente sind vorteilhaft nach dem erfindungsgemäßen Verfahren erhältlich.

Ausgangsprodukt ist ein durch allgemein bekannte Chlorierung von Kupferphthalocyanin erhaltenes Rohpigment. Bevorzugt ist dabei die Umsetzung mit Chlor in einer Salzschmelze, die in der Regel Aluminiumchlorid enthält, z.B. einer Aluminiumchlorid/Titantetrachlorid-Schmelze und vorzugsweise einer Aluminiumchlorid/Natriumchlorid-Schmelze, oder in Chlorsulfonsäure, wobei das eingesetzte Kupferphthalocyanin vorzugsweise chlorfrei ist, aber auch bereits geringe Mengen Chlor (üblicherweise < 6 Gew.-%) enthalten kann. Das Kupferphthalocyanin selbst kann beispielsweise durch Umsetzung von Phthalsäureanhydrid mit Harnstoff oder durch Cyclisierung von o-Phthalodinitril jeweils in Gegenwart von Kupfer oder Kupfersalzen hergestellt worden sein.

Die Isolierung des anchlorierten Rohpigments erfolgt üblicherweise durch Austragen des Chlorierungsansatzes auf Wasser und anschließendes Filtrieren. In der Regel wird der anfallende Filterkuchen mit einer wäßrigen anorganischen Base, z.B. Natronlauge, gewaschen, um Salz und Säurereste zu entfernen.

Beim erfindungsgemäßen Verfahren wird das anchlorierte Rohpigment einer Behandlung mit einem sauren aromatischen organischen Medium in der Wärme unterzogen. Das Rohpigment kann hierbei getrocknet oder vorteilhaft als wasserfeuchter Filterkuchen eingesetzt werden.

Als saures aromatisches organisches Medium wird vorzugsweise eine Verbindung der allgemeinen Formel I

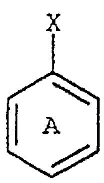 I

eingesetzt.

Der Rest X bedeutet dabei Hydroxy oder Carboxy. Der Benzolring A kann substituiert und/oder benzoanneliert sein, es werden also vorzugsweise Phenol, substituierte Phenole, Naphthole, substituierte Naphthole, Benzoesäure, substituierte Benzoesäuren, Naphthoesäuren und substituierte Naphthoesäuren als saures organisches Medium eingesetzt.

Der Benzolring A kann bis zu 2 gleiche oder verschiedene Substituenten aus der Gruppe Nitro, $C_1$-$C_4$- (bevorzugt $C_1$-$C_2$-)Alkyl, $C_2$-$C_4$- (bevorzugt $C_2$-$C_3$-)Alkenyl, Chlor, Brom und Carboxy tragen.

Wenn X für Carboxy steht, dann ist der Benzolring A bevorzugt durch $C_1$-$C_4$-Alkyl substituiert oder unsubstituiert.

Wenn X Hydroxy bedeutet, dann ist der Benzolring A bevorzugt durch Nitro substituiert.

Benzoannelierte Benzolringe A tragen bevorzugt keine weiteren Substituenten.

Selbstverständlich können auch Mischungen verschiedener saurer organischer Verbindungen eingesetzt werden.

Als Beispiele für geeignete saure aromatische organische Medien seien genannt: Phenol, 2-, 3- und 4-Nitrophenol, 2-, 3- und 4-Methylphenol, 2-, 3- und 4-Ethylphenol, 2-Allylphenol, 2-, 3- und 4-Bromphenol, 2,4-Dibromphenol, 2,4-Dichlorphenol, 2-Chlor-6-nitrophenol, 2-Chlor-4-nitrophenol, 2,4-Dinitrophenol, 3-Methyl-4-nitrophenol, 1- und 2-Naphthol, 1-Brom-2-naphthol, Benzoesäure, 2-, 3- und 4-Methylbenzoesäure, 2-, 3- und 4-Ethylbenzoesäure und 1- und 2-Naphthoesäure, wobei 1- und 2- Naphthol bevorzugt sind und 2-Nitrophenol besonders bevorzugt ist.

In der Regel kommen 1 bis 10 g, vorzugsweise 1,5 bis 2,5 g, saures organisches Medium je g Rohpigment zum Einsatz. Selbstverständlich könnten auch größere Mengen saures Medium verwendet werden, dies wäre jedoch unwirtschaftlich. Bei geringeren Mengen an saurem Medium kann das Gemisch nur schlecht rührbar sein.

Wie bereits erwähnt, kann das Rohpigment vorteilhaft als wasserfeuchter Filterkuchen, der im allgemeinen einen Wassergehalt von 50 bis 90 Gew.-% aufweisen sollte, eingesetzt werden. Auf diese Weise wird nicht nur der Trocknungsschritt eingespart, sondern auch die Rührbarkeit des Gemisches verbessert. Einen zu großen Überschuß an Wasser sollte man jedoch vermeiden, um die Raum/Zeit-Ausbeute nicht unnötig zu senken. Besonders günstig ist daher ein Gewichtsverhältnis von Wasser zu Rohpigment von etwa 3 : 1 bis 5 : 1, das gegebenenfalls auch durch zusätzliche Zugabe von Wasser eingestellt werden kann.

Die erfindungsgemäße Behandlung des Rohpigments mit dem sauren organischen Medium wird bei 140 bis 200°C, vorzugsweise bei 140 bis 160°C, durchgeführt.

Im allgemeinen dauert die thermische Behandlung 1 bis 12 h, bevorzugt 1 bis 8 h und besonders bevorzugt 3 bis 7 h.

Die thermische Behandlung wird im geschlossenen System durchgeführt. Üblicherweise wird unter dem sich einstellenden Eigendruck gearbeitet, dies ist insbesondere bei der Anwesenheit von Wasser der Fall. Gewünschtenfalls kann auch ein höherer Druck oder überhaupt ein Druck aufgeprägt werden. Übliche Druckbereiche sind 1 bis 7 bar.

Zur Isolierung des behandelten Pigments geht man zweckmäßigerweise wie folgt vor:

Man kühlt das Gemisch auf etwa 50 bis 100°C ab und gibt wäßrige Base, insbesondere eine verdünnte Alkalimetallhydroxidlösung, zu, die das saure aromatische organische Medium in ein wasserlösliches Salz überführt, welches bei der anschließenden Filtration vom Pigment abgetrennt wird und vorteilhaft durch Ansäuern aus dem alkalischen Filtrat abgeschieden und wieder in den Prozeß zurückgeführt werden kann. Das Pigment wird dann gewaschen, getrocknet und gemahlen.

Gewünschtenfalls kann man es zur vollständigen Entfernung des sauren Mediums vor der Trocknung noch einer zusätzlichen alkalischen Nachbehandlung unterziehen, bei der der Filterkuchen etwa 2 bis 6 h bei einer Temperatur von Raumtemperatur bis 120°C unter dem sich einstellenden Eigendruck in verdünnter Base, vorzugsweise in einer verdünnten Alkalimetallhydroxidlösung, aufgerührt wird.

Die erfindungsgemäßen anchlorierten Kupferphthalocyaninpigmente eignen sich hervorragend zum Einfärben von Kunststoffen. Polyolefine, wie Polyethylen (HDPE, MDPE, LDPE) und Polypropylen, sowie Polyamid (PA) können verzugsfrei eingefärbt werden.

Beispiele

Herstellung und Prüfung von erfindungsgemäßen anchlorierten Kupferphthalocyaninpigmenten

Beispiele 1 bis 6

Ein Gemisch von a g eines anchlorierten Kupferphthalocyanin-Rohpigments (R) mit einem Chlorgehalt von x Gew.-% und einem Wassergehalt von y Gew.-%, das durch Chlorieren von Kupferphthalocyanin in einer Aluminiumchlorid/Natriumchlorid-Schmelze, Ausfällen des Chlorierungsprodukts in Wasser, waschen mit Wasser und verdünnter Natronlauge als feuchter Filterkuchen (bzw. getrocknet in Beispiel 5 und 6) isoliert wurde, b g Wasser und 200 g 2-Nitrophenol (ONP) wurde in einem druckdicht verschlossenen Reaktor bei einem Druck von d bar $t_1$ h auf $T_1$°C erhitzt.

Nach Abkühlen auf 80°C und Öffnen des Reaktors wurde das Gemisch durch Zugabe von 50 gew.-%iger Natronlauge alkalisch gestellt (pH-Wert > 11), um das 2-Nitrophenol herauszulösen, und filtriert.

Das abfiltrierte und mit Wasser gewaschene Pigment wurde nach Vermischen mit 2 gew.-%iger (Beispiel 6: 1 gew.-%iger) Natronlauge $t_2$ h unter dem sich jeweils einstellenden Druck auf $T_2$°C erhitzt, um Reste an 2-Nitrophenol herauszulösen.

Anschließend wurde das Pigment abfiltriert, mit Wasser gewaschen, getrocknet und etwa 10 s bei 15000 $Umin^{-1}$ min in einer Ultrazentrifugalmühle ZM 100 (Fa. Retsch) gemahlen.

Zur Beurteilung ihrer koloristischen Eigenschaften und ihrer Dispergierhärte wurden die erhaltenen Pigmente in LD-Polyethylen eingearbeitet.

Dazu wurden 80 g einer weißen Grundmischung, bestehend aus einer vorextrudiercen Mischung von 5 g Titandioxid (Titandioxid Kronos 2220), 2,5 g Lupolen® 1800 S Pulver (Dichte 0,917 $g/cm^3$, Schmelzindex MFR (190/2,16) 17-22) und 92,5 g Lupolen 1812 E Granulat (Dichte 0,920 $g/cm^3$, Schmelzindex MFR (190/2,16) 0,5) mit 0,4 g des zu prüfenden Pigments auf einem Mischwalzwerk bei einer Walzentemperatur von 160°C und 200 Walzenumdrehungen zu einem Walzenfell der Stärke 0,4 mm verarbeitet. Nach Halbierung des Walzenfells wurde die eine Hälfte weitere 200 Walzenumdrehungen bei einer Walzentemperatur von 130°C gewalzt. Die Fellstärke betrug dabei 0,3 mm. Beide Walzfelle wurden jeweils zerteilt und in einer Presse mit Distanzrahmen in 1 min bei 160°C zu Platten gepreßt. Anschließend wurden die Platten unter Verwendung der Normlichtart D65 farbmetrisch nach der CIELAB-Formel (DIN 6174) ausgewertet.

Hierbei wurde das nicht mit 2-Nitrophenol behandelte, sondern lediglich gemahlene Rohpigment (V) als Standard verwendet (Farbwinkel H = 237,6°; Chroma C* = 37,1; FAE-Wert (Färbeäquivalente) = 100). FAE-Werte < 100 bedeuten eine höhere Farbstärke als beim Standard, FAE-Werte > 100 entsprechend eine geringere Farbstärke.

Die Dispergierhärte (DH) wurde aus den bei der Messung erhaltenen Aufhellverhältnissen nach der folgenden Formel berechnet:

$$DH = \left[ \frac{AV\,1}{AV\,2} - 1 \right] * 100$$

AV 1 = Aufhellverhältnis der bei 130°C hergestellten Färbung

AV 2 = Aufhellverhältnis der bei 160°C hergestellten Färbung

Flaschenkästen aus LDPE, die mit den erfindungsgemäßen anchlorierten Kupferphthalocyaninpigmenten eingefärbt wurden, zeigten keinen Verzug.

Weitere Einzelheiten zu diesen Versuchen sowie deren Ergebnisse sind in der folgenden Tabelle zusammengestellt. Zum Vergleich sind das nicht mit 2-Nitrophenol behandelte Rohpigment (Beispiel V) sowie das analog der EP-A-909 795 bei 100°C mit 2-Nitrophenol behandelte Rohpigment (Beispiel V1) mitaufgeführt.

Tabelle

| Bsp. | a g R | x Gew.-% Cl | y Gew.-% $H_2O$ | b g $H_2O$ | d bar | $T_1$ °C | $t_1$ h | $T_2$ °C | $t_2$ h | Ausbeute g | FAE | ΔH | ΔC* | DH |
|---|---|---|---|---|---|---|---|---|---|---|---|---|---|---|
| 1 | 391 | 16,8 | 74,4 | 109 | 4,2 | 150 | 2 | 80 | 1 | 96 | 91 | -0,5 | +0,5 | 8 |
| 2 | 391 | 16,8 | 74,4 | 109 | 4,2 | 150 | 5 | 80 | 4 | 97 | 85 | -0,3 | +0,5 | 9 |
| 3 | 391 | 16,8 | 74,4 | 109 | 4,2 | 150 | 6 | 120 | 1 | 97 | 83 | -0,2 | +1,3 | 6 |
| 4 | 391 | 16,8 | 74,4 | 109 | 4,2 | 150 | 6 | - | - | 96 | 83 | -0,7 | +1,1 | 4 |
| 5 | 100 | 17,0 | - | 400 | 4,3 | 150 | 6 | 30 | 1 | 96 | 84 | -0,2 | +0,0 | 6 |
| 6 | 100 | 17,0 | - | 400 | 4,3 | 150 | 6 | 120 | 1 | 95 | 87 | +0,1 | +1,1 | 6 |
| V | - | 17,0 | - | - | - | - | - | - | - | - | 100 | 0 | 0 | 41 |
| V1 | 391 | 16,8 | 74,4 | 109 | - | 100 | 5 | - | - | 96 | 100 | -1,0 | -0,9 | 17 |

## Patentansprüche

1. Anchlorierte Kupferphthalocyaninpigmente mit einem Chlorgehalt von 10 bis 40 Gew.-%, die in LDPE eine Dispergierhärte ≤ 10 aufweisen.

2. Anchlorierte Kupferphthalocyaninpigmente mit einem Chlorgehalt von 10 bis 40 Gew.-%, erhältlich durch Isolieren des bei der Chlorierung von Kupferphthalocyanin erhaltenen Rohpigments als wasserfeuchten Filterkuchen, gegebenenfalls Trocknen des Rohpigments, Mischen des wasserfeuchten bzw. des getrockneten Rohpigments mit einem sauren aromatischen organischen Medium und Erhitzen des Gemischs im geschlossenen System bei einem Druck von 1 bis 7 bar auf 140 bis 200°C sowie anschließendes Isolieren des behandelten Pigments auf übliche Weise.

3. Verfahren zur Herstellung von Kupferphthalocyaninpigmenten gemäß Anspruch 1 oder 2, **dadurch gekennzeichnet, daß** man das bei der Chlorierung von Kupferphthalocyanin erhaltene Rohpigment als wasserfeuchten Filterkuchen isoliert, gegebenenfalls trocknet, das wasserfeuchte bzw. das getrocknete Rohpigment mit einem sauren aromatischen organischen Medium mischt und dieses Gemisch im geschlossenen System bei einem Druck von 1 bis 7 bar auf 140 bis 200°C erhitzt sowie das behandelte Pigment anschließend auf übliche Weise isoliert.

4. Verfahren nach Anspruch 4, **dadurch gekennzeichnet, daß** man als saures aromatisches organisches Medium eine Verbindung der allgemeinen Formel I

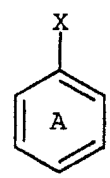

I

einsetzt, in welcher X Hydroxy oder Carboxy bedeutet und der Benzolring A zusätzlich bis zu zwei gleiche oder verschiedenen Substituenten aus der Gruppe Nitro, $C_1$-$C_4$-Alkyl, $C_2$-$C_4$-Alkenyl, Chlor, Brom und Carboxy tragen kann und benzoanneliert sein kann.

5. Verfahren nach Anspruch 3 oder 4, **dadurch gekennzeichnet, daß** man als saures aromatisches organisches Medium 2-Nitrophenol oder 1- oder 2-Naphthol einsetzt.

6. Verfahren nach den Ansprüchen 3 bis 5, **dadurch**

**gekennzeichnet, daß** man das Rohpigment bei 140 bis 160°C mit dem sauren aromatischen organischen Medium behandelt.

7. Verfahren nach den Ansprüchen 3 bis 6, **dadurch gekennzeichnet, daß** man das Rohpigment 1 bis 12 h mit dem sauren aromatischen organischen Medium behandelt.

8. Verfahren nach den Ansprüchen 3 bis 7, **dadurch gekennzeichnet, daß** man das Erhitzen des Rohpigments im sauren aromatischen organischen Medium in Gegenwart von Wasser vornimmt.

9. Verfahren nach den Ansprüchen 3 bis 8, **dadurch gekennzeichnet, daß** man das behandelte Pigment einer alkalischen Nachbehandlung unterzieht.

10. Verwendung von Kupferphthalocyaninpigmenten gemäß Anspruch 1 oder 2 zum verzugsfreien Einfärben von Kunststoffen.

**Claims**

1. Incipiently chlorinated copper phthalocyanine pigments having a chlorine content of from 10 to 40% by weight, **characterized by** a dispersion harshness ≤ 10 in LDPE.

2. Incipiently chlorinated copper phthalocyanine pigments having a chlorine content of from 10 to 40% by weight, obtainable by isolating as a water-moist filter cake the crude pigment obtained in the chlorination of copper phthalocyanine, optionally drying the crude pigment, mixing the water-moist or dried crude pigment with an acidic aromatic organic medium and heating the mixture in a closed system to 140-200°C at from 1 to 7 bar and subsequently isolating the treated pigment in a conventional manner.

3. A process for preparing copper phthalocyanine pigments as claimed in claim 1 or 2, which comprises isolating as a water-moist filter cake the crude pigment obtained in the chlorination of copper phthalocyanine, optionally drying this crude pigment, mixing the water-moist or dried crude pigment with an acidic aromatic organic medium and heating this mixture in a closed system to 140-200°C at from 1 to 7 bar and subsequently isolating the treated pigment in a conventional manner.

4. A process as claimed in claim 3, wherein the acidic aromatic organic medium is a compound of the general formula I

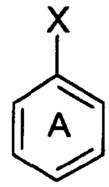

I

where X is hydroxyl or carboxyl and the benzene ring A may additionally bear up to two identical or different substituents selected from the group consisting of nitro, $C_1$-$C_4$-alkyl, $C_2$-$C_4$-alkenyl, chlorine, bromine and carboxyl and may be benzofused.

5. A process as claimed in claim 3 or 4, wherein the acidic aromatic organic medium is 2-nitrophenol or 1- or 2-naphthol.

6. A process as claimed in any of claims 3 to 5, wherein the crude pigment is treated with the acidic aromatic organic medium at from 140 to 160°C.

7. A process as claimed in any of claims 3 to 6, wherein the crude pigment is treated with the acidic aromatic organic medium for from 1 to 12 h.

8. A process as claimed in any of claims 3 to 7, wherein the heating of the crude pigment in the acidic aromatic organic medium is effected in the presence of water.

9. A process-as claimed in any of claims 3 to 8, wherein the treated pigment is subjected to an alkaline aftertreatment.

10. The method of using copper phthalocyanine pigments as claimed in claim 1 or 2 for warp-free coloration of plastics.

**Revendications**

1. Pigments de phtalocyanine de cuivre chlorés avec un taux de chlore de 10 à 40% en poids, qui comporte une difficulté de dispersion inférieure ou égale à 10.

2. Pigments de phtalocyanine de cuivre chlorés avec un taux de chlore de 10 à 40% en poids, obtenus à l'état de gâteaux de filtration humides par séparation du pigment brut, lequel est obtenu par chloration de phtalocyanine de cuivre, le cas échéant par séchage du pigment brut, mélange avec un médium acide organique aromatique du pigment brut humide ou éventuellement séché et chauffage du mélange dans un système fermé sous une pression de 1 à 7 bar à la température de 140 à 200° C ainsi que, par la suite, la séparation habituelle du pigment traité.

3. Procédé de fabrication de pigments de phtalocyanine de cuivre selon la revendication 1 ou 2, **caractérisé en ce que** l'on sépare à l'état de gâteaux de filtration humides le pigment brut obtenu par chloration de phtalocyanine de cuivre, le cas échéant séché, on mélange avec un médium acide organique aromatique le pigment brut humide ou éventuellement sec et on chauffe ce mélange dans un système fermé sous une pression de 1 à 7 bar à la température de 140 à 200° C ainsi que, par la suite, on sépare de manière habituelle le pigment traité.

4. Procédé selon la revendication 4, **caractérisé en ce que** l'on emploie comme médium acide organique aromatique le composé de formule générale I

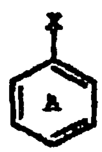

I

dans laquelle X représente un groupe hydroxy ou un groupe carboxy et le noyau benzénique peut porter en outre jusqu'à deux substituants identiques ou différents choisis dans le groupe contenant l'azote, le groupe alkyle en $C_1$-$C_4$, le groupe alcényle en $C_2$-$C_4$, le chlore, le brome et un groupe carboxy et peut subir une annellation benzénique.

5. Procédé selon la revendication 3 ou 4, **caractérisé en ce que** l'on emploie comme médium acide organique aromatique du 2-nitrophénol ou du 1-naphtol ou du 2-naphtol.

6. Procédé selon les revendications 3 à 5, **caractérisé en ce que** l'on traite le pigment brut avec le médium acide organique aromatique à la température allant de 140°C à 160°C.

7. Procédé selon les revendications 3 à 6, **caractérisé en ce que** l'on traite le pigment brut avec le médium acide organique aromatique pendant une durée de 1 à 12 h.

8. Procédé selon les revendications 3 à 7, **caractérisé en ce que** l'on effectue le chauffage du pigment brut dans le médium acide organique aromatique en présence d'eau.

9. Procédé selon les revendications 3 à 8, **caractérisé en ce que** l'on soumet le pigment traité à un retraitement alcalin.

10. Emploi de pigments de phtalocyanine de cuivre selon la revendication 1 ou 2, pour la coloration rapide de matières plastiques.